# FASCICULE DE BREVET EUROPEEN

(11) **EP 2 959 199 B1**
(45) Date de publication et mention de la délivrance du brevet: **08.08.2018**
(21) Numéro de dépôt: 14718633.2
(22) Date de dépôt: 24.02.2014
(51) Int. Cl.: F16L 11/08

(54) **CONDUITE FLEXIBLE POUR LE TRANSPORT DES HYDROCARBURES A GAINE D'ETANCHEITE EXTERNE RENFORCEE**
FLEXIBLES ROHR ZUM TRANSPORT VON KOHLENWASSERSTOFFEN MIT EINER ÄUSSEREN VERSTÄRKTEN VERSIEGELTEN HÜLLE
FLEXIBLE PIPE FOR TRANSPORTING HYDROCARBONS HAVING AN OUTER REINFORCED SEALED SHEATH

(30) Priorité: 25.02.2013 FR 1351624
(43) Date de publication de la demande: 30.12.2015
(73) Titulaire: Technip France, 92400 Courbevoie (FR)
(72) Inventeur: LACHAT, Véronique, 75013 Paris (FR); DO, Anh-Tuan, 95240 Cormeilles-en-Parisis (FR)
(74) Mandataire: Gendron, Vincent Christian
(86) Numéro de dépôt international: PCT/FR2014/050377
(87) Numéro de publication internationale: WO 2014/128422

(56) Documents cités:
- WO-A2-2008/033134
- AU-A1- 2005 200 068
- US-A- 4 537 225
- US-A1- 2007 119 512

## Description

La présente invention concerne une conduite flexible sous-marine destinée au transport des hydrocarbures.

La conduite flexible concernée par la présente invention est notamment du type non liée et utilisée dans une exploitation en mer. Ce type de conduite est connu du document US 2007/0119512 A1. Les conduites flexibles utilisées en mer doivent pouvoir résister à des pressions internes et/ou à des pressions externes fortes et supporter également des flexions longitudinales ou des torsions sans risque de rupture. Elles présentent des configurations variées en fonction de leur utilisation précise mais répondent en général aux critères constructifs définis notamment dans les normes API 17 B et API 17 J, établies par l'American Petroleum Institute sous l'intitulé "Recommended Practice for Flexible Pipe" and "Spécification for Unbonded Flexible Pipe".

Ainsi, une conduite flexible comprend généralement de l'intérieur vers l'extérieur de la conduite :
- un ensemble structurel résistant aux efforts radiaux composé d'une gaine d'étanchéité interne réalisée en matière plastique, généralement polymère, résistant plus ou moins à l'action chimique du fluide à transporter, et d'un enroulement en hélice à pas court d'un élément métallique;
- au moins une nappe (et généralement au moins deux nappes croisées) d'armures de traction enroulées à pas long; et
- une gaine de protection et d'étanchéité externe en matériau polymère, pour protéger l'ensemble de la conduite et notamment pour empêcher l'eau de mer de pénétrer dans son épaisseur.

Dans les conduites à passage lisse, dites "smooth bore", ledit ensemble structurel est constitué par ladite gaine d'étanchéité interne et une voûte de pression résistant principalement à la pression interne imposée par le fluide à la paroi de la gaine d'étanchéité interne dans sa circonférence (contrainte circonférentielle ou « hoop stress » selon la terminologie anglo-saxonne) et constituée par l'enroulement en hélice à pas court autour de la gaine d'étanchéité interne, d'un ou plusieurs fils métalliques de forme agrafés. Dans une conduite à passage non-lisse, dite "rough bore", on prévoit en outre à l'intérieur de la gaine d'étanchéité interne, une carcasse métallique constituée d'un feuillard agrafé, qui sert à empêcher l'écrasement (en anglais "collapse") de la conduite sous l'effet de la pression externe. La voûte de pression participe néanmoins aussi à la résistance à l'écrasement. La carcasse métallique et la voûte de pression sont donc constituées d'éléments enroulés à pas court, et elles confèrent à la conduite sa résistance aux efforts radiaux, tandis que les nappes d'armures de traction sont constituées de fils métalliques enroulés selon des pas longs pour reprendre les efforts axiaux. La nature, le nombre, le dimensionnement et l'organisation de ces couches sont essentiellement liés aux conditions d'utilisation des conduites flexibles concernées ainsi qu'à leur installation. A noter que les différentes couches successives présentent une certaine liberté de se déplacer les unes par rapport aux autres, ce qui assure la bonne flexibilité de la conduite.

Dans la présente demande, la notion d'enroulement à pas court désigne tout enroulement hélicoïdal selon un angle d'hélice proche de 90° et typiquement compris entre 75° et 90° relativement à l'axe longitudinal de la conduite. La notion d'enroulement à pas long recouvre quant à elle les angles d'hélice inférieurs à 55°, typiquement compris entre 25° et 55°, relativement à l'axe longitudinal de la conduite.

Que la conduite soit de type « smooth bore » ou « rough bore », une gaine de protection et d'étanchéité externe est généralement extrudée autour de ladite au moins une nappe d'armures de résistance aux efforts de traction, afin de jouer son rôle de gaine protectrice de la conduite, en contrepartie duquel elle est soumise à un ensemble de dégradations.

En particulier, lors de l'installation des conduites flexibles sur le fond marin, les systèmes de pose de flexible comportent généralement un système de reprise de tension ou tensionneur, afin de contrer les efforts de tension engendrés par le poids de la conduite suspendue ainsi que les mouvements du milieu marin ambiant. Ces tensionneurs sont à contact linéaire (de type chenille) et viennent serrer un tronçon de conduite flexible sur une certaine longueur de la conduite par au moins une paire de patins sans fin opposés, l'objectif étant de transmettre l'effort de serrage ainsi exercé sur la gaine de protection et d'étanchéité externe aux armures extérieures de résistance aux efforts de traction. Les forces exercées sont calculées pour tenir compte du coefficient de frottement minimal existant entre les différentes couches de la conduite situées entre le patin de chenille et les armures du flexible. La valeur plutôt faible de ce coefficient de frottement impose de comprimer fortement la conduite flexible de manière à pouvoir transmettre des efforts de retenue tangentiels suffisamment importants. Cependant, le fait d'augmenter ainsi l'effort de serrage sur la conduite flexible risque de dégrader la gaine de protection et d'étanchéité externe au niveau de la zone de contact avec le patin.

Une autre source potentielle d'endommagement de la face externe de la gaine de protection et d'étanchéité externe de la conduite est liée à la fourniture d'un I-tube ou J-tube, servant de tube de guidage d'une conduite flexible, solidaire de la structure en surface (plateforme), de manière à éviter que la conduite flexible ne subisse des sollicitations en torsion ou en flexion trop importantes lors de son installation ou lorsqu'elle est en service. Il se peut que, lorsque la conduite est soumise aux mouvements marins, ou bien encore lors de la remontée de la conduite au travers du tube de guidage, la gaine de protection et d'étanchéité externe subisse une abrasion externe susceptible d'engendrer des microfissures. L'utilisation de bouées lors de l'installation peut aussi générer de l'abrasion en face externe de la gaine de protection et d'étanchéité externe de la conduite.

Par ailleurs, les efforts combinés d'une part, de la contrainte circonférentielle (« hoop stress ») s'appliquant sur les parois de la carcasse ou de la gaine d'étanchéité interne et, d'autre part, de la pression extérieure (ou pression hydrostatique) exercée sur la conduite par le milieu environnant, font que l'ensemble des couches de la conduite sont fortement comprimées les unes par rapport aux autres, ce qui peut aussi mener à l'endommagement de certaines d'entre elles et, en particulier, de la gaine de protection et d'étanchéité externe, par abrasion, usure ou encore par initiation et propagation de fissures.

En outre, il est connu d'enrouler à pas court, autour des nappes d'armures de traction, des bandes adhésives et/ou renforcées de fibres d'aramide (par exemple commercialisées sous la marque Kevlar®, Twaron® ou Technora®), notamment afin de maintenir en place les fils d'armures après leur pose, mais également afin de limiter le gonflement des nappes d'armures de traction en « cage d'oiseau » (« bird cage » en anglais), de part leur grande résistance mécanique en traction suivant leur axe longitudinal. Ces bandes de maintien se présentent typiquement sous la forme de faisceaux relativement plats de mèches de fibres orientées parallèlement à l'axe longitudinal de la bande et assemblées entre elles par des éléments d'assemblage transverses assimilables à des fils de trame, les mèches de fibre formant la chaîne, et la bande de maintien pouvant être considéré comme un matériau tissé. La gaine de protection et d'étanchéité externe est alors extrudée autour de cette bande. Cependant, il arrive que la bande de maintien ainsi interposée entre les armures de résistance aux efforts de traction et la face interne de la gaine de protection et d'étanchéité externe ne reste pas en position pendant toute la durée d'exploitation de la conduite, laissant alors apparaître les interstices ou déjoints entre les fils de la nappe d'armures sous-jacente, et/ou qu'il se détériore. Aussi, en plus de l'abrasion générée en face interne de la gaine de protection et d'étanchéité externe par frottement entre ladite face interne et la bande sous-jacente et/ou les fils d'armures, un endommagement de la gaine de protection et d'étanchéité externe par initiation et propagation de microfissures est susceptible de se produire, si la face interne de ladite gaine venait à fluer au niveau des interstices entre les fils d'armures.

En dernier lieu, un endommagement de la gaine de protection et d'étanchéité externe est susceptible d'affaiblir la résistance de la conduite vis-à-vis des contraintes circonférentielles (« hoop stress ») qu'elle subit, liées à l'effort radial qu'applique le fluide d'hydrocarbure sur les parois de la carcasse ou de la gaine d'étanchéité interne lorsque ce fluide circule à l'intérieur de la conduite. Le spiralage à pas court d'une voûte de pression par-dessus la gaine d'étanchéité interne permet de limiter le phénomène précité de « hoop stress » et partant, permet d'éviter que la conduite éclate (« burst » en langue anglaise). Cependant, s'il y a diffusion de gaz dans l'espace annulaire entre la gaine de pression et la gaine de protection et d'étanchéité externe et que la conduite est soumise à une forte pression interne, cette dernière risque d'être endommagée par phénomène de cloquage (« blistering » en anglais) lors d'une dépressurisation brutale de la conduite flexible et partant, la résistance de la conduite au « hoop stress » s'en trouve affaiblie.

Aussi, un problème qui se pose et que vise à résoudre la présente invention, est de fournir une conduite flexible sous-marine exempte des limitations précitées. En particulier, un but de l'invention est de fournir une conduite flexible sous-marine, qui permette d'améliorer la résistance à l'abrasion de la gaine de protection et d'étanchéité externe.

Un autre but de l'invention est de fournir une conduite flexible sous-marine, qui permette d'améliorer la résistance de la gaine de protection et d'étanchéité externe au déchirement et à la propagation de fissures en son sein.

Un autre but de l'invention est de fournir une conduite flexible sous-marine, qui permette d'améliorer la résistance de la conduite au phénomène de « hoop stress ».

A ces fins, la présente invention propose une conduite tubulaire flexible destinée au transport des hydrocarbures réalisée par une superposition de couches successives indépendantes comprenant au moins, de l'intérieur vers l'extérieur, une gaine d'étanchéité interne, un enroulement hélicoïdal à pas court d'un élément métallique, au moins une nappe d'armures de traction enroulées à pas long et une gaine de protection et d'étanchéité externe constituée d'une couche extrudée en matériau polymère comprenant deux faces opposées l'une de l'autre, respectivement interne et externe et, selon l'invention, ladite conduite comprend en outre au moins un ruban de renfort constitué d'un matériau non tissé à base de fibres au moins partiellement noyées à l'intérieur dudit matériau polymère de ladite gaine de protection et d'étanchéité externe, pour lier ensemble mécaniquement ledit ruban de renfort et ladite gaine de protection et d'étanchéité externe.

Ainsi, une caractéristique de l'invention réside dans la mise en oeuvre du ruban de renfort en matériau non tissé, que l'on vient lier au matériau polymère de la gaine de protection et d'étanchéité externe, de sorte que le ruban de renfort adhère fortement à ladite gaine, et en constitue ainsi un élément de renforcement, par quoi les propriétés mécaniques de la gaine de protection et d'étanchéité externe, en termes de résistance aux contraintes qui s'exercent sur elles comme rappelées plus haut (frottement, abrasion, déchirement, « hoop stress »), sont grandement renforcées et la gaine de protection et d'étanchéité externe peut alors jouer son rôle de gaine protectrice de la conduite en étant préservée des dégradations. Cette caractéristique permet donc d'augmenter significativement l'efficacité et la durée de vie de la gaine de protection et d'étanchéité externe de la conduite.

Ainsi, selon l'invention, la gaine de protection et d'étanchéité externe et le ruban de renfort sont deux couches de natures différentes, distinctes l'une de l'autre, constituées respectivement d'une couche extrudée en matériau polymère et d'un matériau non tissé à base de fibres au moins partiellement noyées à l'intérieur dudit matériau polymère de la gaine. Grâce à cet agencement particulier, les surfaces respectives de la gaine de protection et d'étanchéité externe et du ruban de renfort sont totalement liées entre elles par interpénétration des fibres du matériau non tissé du ruban de renfort et du matériau polymère de la couche extrudée formant la gaine, par quoi une forte liaison mécanique est créée entre ces couches. Le ruban de renfort est donc lié, par interpénétration, au matériau polymère de ladite gaine de protection et d'étanchéité externe sur la totalité de leurs surfaces respectives. Partant, le ruban de renfort adhère fortement à la gaine de protection externe, créant ainsi une forte liaison mécanique et ce, sans adjonction d'un quelconque moyen de collage additionnel, permettant le renforcement de la gaine de protection et d'étanchéité externe.

Selon un mode de réalisation particulier, ledit ruban de renfort est lié à ladite face interne de ladite gaine de protection et d'étanchéité externe, de sorte que ladite face interne est recouverte dudit ruban de renfort qui y adhère fortement. Ainsi, la gaine de protection et d'étanchéité externe est-elle préservée de l'usure par abrasion interne contre les armures de résistance à la traction et/ou contre la bande de maintien sous-jacente éventuellement enroulée à pas court autour des armures. De surcroît, un tel agencement améliore la résistance de la gaine au déchirement et à la propagation de fissures, en préservant notamment la gaine de tout risque de fluage au niveau des déjoints entre les fils d'armure grâce à la présence du ruban de renfort à base de fibres non tissées, lié à la face interne de la gaine et formant ainsi une barrière de protection pour la gaine polymérique vis-à-vis des fils d'armures.

Selon un autre mode de réalisation, ledit ruban de renfort est lié à ladite face externe de ladite gaine de protection et d'étanchéité externe, de sorte que ladite face externe est recouverte dudit ruban de renfort, qui y adhère fortement. Ainsi, la gaine de protection et d'étanchéité externe est-elle préservée de l'usure par abrasion externe et partant, du risque d'apparition de microfissures dommageables pour son intégrité.

Selon un autre mode de réalisation, ledit ruban de renfort est lié à coeur de ladite gaine de protection et d'étanchéité externe. Dit autrement, ledit ruban de renfort est disposé intégralement dans l'épaisseur de ladite gaine de protection et d'étanchéité externe. De la sorte, grâce aux bonnes propriétés mécaniques des fibres non tissées constituant le ruban de renfort ainsi inséré à coeur de la gaine de protection et d'étanchéité externe, la résistance mécanique de cette dernière est renforcée en particulier vis-à-vis des efforts radiaux et partant, les performances de la conduite vis-à-vis du phénomène de « hoop stress » s'en trouvent notablement améliorées.

Les différents modes de réalisation exposés ci-dessus peuvent être mis en oeuvre seuls ou en combinaison entre eux. Ainsi, par exemple, on pourra venir disposer ledit ruban de renfort en matériau non tissé sur chacune des deux faces opposées, respectivement interne et externe, de ladite gaine de protection et d'étanchéité externe, de manière à préserver ladite gaine de l'abrasion sur ses deux faces. Selon cet agencement, ladite gaine de protection et d'étanchéité externe est prise en sandwich entre deux rubans de renforts en matériau non tissé, liés mécaniquement au matériau polymère de la gaine de protection et d'étanchéité externe, tant en face interne qu'en face externe de cette dernière.

Ledit ruban de renfort est préférentiellement constitué d'une couche textile à base de fibres courtes non tissées assemblées par compactage mécanique et/ou collage.

Ledit ruban de renfort est disposé selon un enroulement à pas court selon un angle préférentiellement compris entre 75° et 90° et avantageusement sensiblement proche de 90° par rapport à l'axe longitudinal de la conduite. De la sorte, le ruban de renfort est particulièrement adapté à améliorer la résistance de la conduite au phénomène de « hoop stress ».

En variante, ledit ruban de renfort peut être disposé selon un enroulement à pas long selon un angle inférieur à 55° et préférentiellement selon un angle compris entre 25° et 55° par rapport à l'axe longitudinal de la conduite.

Avantageusement, lesdites fibres non tissée constituant ledit ruban de renfort sont au moins partiellement imprégnées avec un matériau polymère thermoplastique et, préférentiellement, totalement imprégnées. L'imprégnation, même partielle, des fibres non tissées constituant le ruban de renfort, permet d'améliorer l'adhérence des fibres avec la couche polymérique adjacente de la gaine de protection et d'étanchéité externe.

De préférence, lesdites fibres sont réalisées dans un matériau choisi parmi les polyoléfines, les polyfluorés, les polyesters, les acryliques, les polyetherimides, les polysulfures, les poly(aryléthercétone), les aramides, le verre et le basait.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- La figure 1 est une vue en coupe longitudinale d'une conduite tubulaire flexible à laquelle est appliquée l'invention ;
- la Figure 2 est une vue schématique en coupe longitudinale de la gaine de protection et d'étanchéité externe de la même conduite modifiée conformément à un mode de réalisation particulier de l'invention ;
- la Figure 3 est une vue schématique en coupe longitudinale de la gaine de protection et d'étanchéité externe de la même conduite modifiée conformément à un autre mode de réalisation particulier de l'invention;
- la Figure 4 est une vue schématique en coupe longitudinale de la gaine de protection et d'étanchéité externe de la même conduite modifiée conformément à encore un autre mode de réalisation particulier de l'invention.

La conduite 1 d'axe longitudinal 2 comprend de l'intérieur vers l'extérieur une carcasse 3 en feuillard agrafé, une gaine d'étanchéité interne polymérique 4, une voûte métallique 5 constituée par un enroulement en hélice à pas court d'au moins un fil métallique de forme, une couche d'armures résistant à la traction axiale dans le sens longitudinal de la conduite et constituée d'une paire de nappes d'armures croisées 6, 7 d'enroulement à pas long de fils en matériau métallique ou composite en sens contraire, et une gaine de protection et d'étanchéité externe en matériau polymère 8. Du fait de la présence de la carcasse interne 3, cette conduite est dite à passage non lisse (« rough bore »), mais l'invention pourrait tout aussi bien s'appliquer à une conduite dite à passage lisse (« smooth bore »), ne comportant pas de carcasse interne. De même, on ne sortirait pas du champ de l'invention si d'autres couches, non représentées, étaient prévues, selon le type et la destination de la conduite, comme par exemple une bande de maintien constituée par un enroulement à pas court d'une bande en matériau composite autour de la nappe d'armures de traction la plus extérieure 7 ou une bande anti-usure constituée par un enroulement à pas court d'une bande en matériau polymérique intercalée entre les deux nappes d'armures 6,7.

La gaine de protection et d'étanchéité 8 est dite externe car il s'agit de la dernière couche constitutive de la conduite en partant de l'intérieur de celle-ci. La gaine de protection et d'étanchéité externe présente deux faces opposées, respectivement une face interne 81 et une face externe 82, orientées de sorte que la face interne 81 est directement en contact avec les couches sous-jacentes de la conduite, tandis que la face externe 82 est directement en contact avec le milieu environnant de la conduite, typiquement l'eau de mer.

L'invention prévoit la fourniture d'un ruban de renfort de la gaine de protection et d'étanchéité externe 8, réalisé en matériau non tissé pour renforcer spécifiquement la gaine de protection et d'étanchéité externe 8. Conformément à différents modes de réalisation de l'invention que l'on détaillera ci-après, un tel ruban est mis en oeuvre en étant noyé au moins partiellement à l'intérieur du matériau polymère de la gaine de protection et d'étanchéité externe 8, de sorte que le ruban de renfort est lié mécaniquement avec la gaine de protection et d'étanchéité externe 8 et en constitue ainsi l'élément de renforcement.

Conformément à l'invention, le ruban de renfort de la gaine de protection et d'étanchéité externe comprend un matériau non tissé à base de fibres, ou mat, constituées préférentiellement de fibres courtes non tissées de quelques millimètres, par exemple d'une longueur comprise entre 1mm et 50mm, réalisées dans un matériau du type aramide, connu par exemple sous les dénominations commerciales Twaron® ou Technora® ; verre ; basait ; polyoléfine tel que le polyéthylène à haut module (UHWMPE) ou le polypropylène (PP) ; polyfluoré tel que le polyfluorure de vinylidène (PVDF) ; polyester tel que le polyéthylène térephtalate (PET) ; acrylique tel que le polyacrylonitrile (PAN) ; polyetherimide (PEI) ; polysulfure tel que le polysulfure de phénylène (PPS); poly(aryléthercétone) tels que le polyétheréthercétone (PEEK) ou le polyéthercétonecétone (PEKK), etc. Les fibres sont assemblées entre elles en une ou plusieurs couches par compactage mécanique et/ou collage pour former un non tissé, d'une épaisseur comprise préférentiellement entre 0,3 et 5mm.

Le ruban de renfort est destiné à être enroulé à pas court ou bien à pas long et cet enroulement peut être jointif ou avec recouvrement entre les spires. Le ruban de renfort forme de surcroît une couche destinée à être enroulée en étant liée à la couche polymérique constituant la gaine de protection et d'étanchéité externe avec adhésion entre elles, de façon à augmenter la résistance de la gaine, en particulier vis-à-vis du déchirement et de la propagation des fissures. La disposition de l'enroulement du ruban de renfort relativement à la gaine de protection et d'étanchéité externe est réalisée selon différents modes de réalisation ci-après.

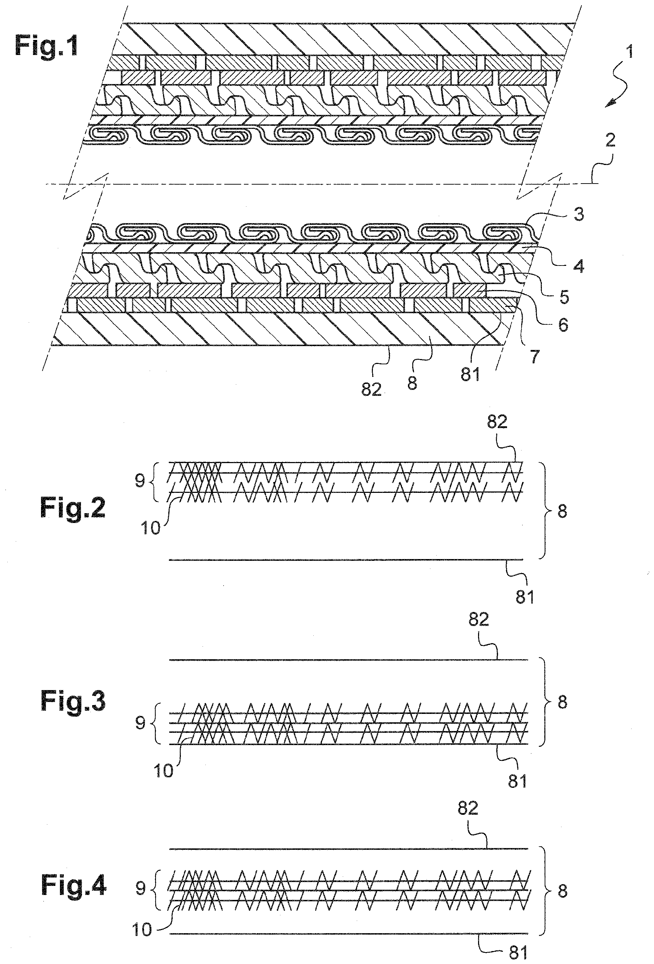

Conformément au mode de réalisation de la figure 2, le ruban de renfort 9 constitué de fibres 10 assemblées pour former un non tissé ou mat, est disposé au niveau de la face externe 82 de la gaine de protection et d'étanchéité externe, de manière à former un revêtement en face externe 82 de la gaine de protection et d'étanchéité externe 8, permettant ainsi d'éviter une abrasion externe de la gaine notamment. Une méthode de mise en oeuvre du ruban de renfort 9 selon ce premier mode de réalisation lors de la fabrication de la conduite tubulaire flexible, est la suivante.

Une couche polymérique destinée à former la gaine de protection et d'étanchéité externe 8 de la conduite est extrudée à une température de fusion autour des armures de résistance aux efforts de traction et, simultanément, le ruban de renfort 9 réalisé en fibres 10 non tissées est délivré directement en sortie de la tête d'extrusion pour être enroulée autour de la face externe 82 de la couche polymérique constituant la gaine de protection et d'étanchéité externe 8 extrudée autour des armures. Le ruban de renfort 9 en fibres non tissées est appliqué avec une certaine pression propre à permettre sa pénétration vers l'intérieur de la couche polymérique encore visqueuse en phase de refroidissement, de sorte que le ruban de renfort 9 en fibres non tissées et la gaine de protection et d'étanchéité externe 8 s'interpénètrent ainsi l'un dans l'autre au niveau de la face externe 82 de la gaine de protection et d'étanchéité externe 8, pour pouvoir emprisonner les fibres après refroidissement, créant ainsi la liaison mécanique entre le ruban de renfort 9 en non tissé et la couche polymérique de la gaine de protection et d'étanchéité externe 8, au niveau de sa face externe 82.

Selon un mode de réalisation préféré, les fibres 10 non tissées constituant le ruban de renfort 9 sont au moins partiellement imprégnées et, préférentiellement totalement imprégnées, avec une matière de liage, par exemple de type thermoplastique. Tous les matériaux thermoplastiques extrudables sont susceptibles de convenir pour réaliser l'imprégnation des fibres 10 non tissées du ruban de renfort 9 et on pourra par exemple choisir la matière de liage parmi les matériaux thermoplastique de type polyoléfine, polyvinylidène, polyamide, polyester, poly(aryléthercétone), poly(arlènesulfone), polyfluoré, etc. De la sorte, lors de l'enroulement du ruban de renfort 9 à base de fibres non tissées, la matière de liage confère aux fibres 10 du ruban de renfort 9 une bonne adhésion avec la couche polymérique adjacente, par imprégnation de leurs surfaces respectives.

Pour réaliser le ruban de renfort 9 destiné à être lié à la gaine de protection et d'étanchéité externe 8, on peut également utiliser un assemblage de fibres 10 non tissées comportant deux types distincts de fibres polymères, respectivement des fibres dites « basse température » (de type polypropylène par exemple) et des fibres dites « haute température » (type aramide, polyétheréthercétone (PEEK), par exemple). Selon cette variante, après avoir enroulé le ruban de renfort 9 autour de la gaine de protection et d'étanchéité externe 8, on vient extruder une couche polymérique de même nature que les fibres dites « basse température » de l'assemblage de fibres 10 non tissées autour du ruban de renfort 9, c'est-à-dire que la température d'extrusion de la couche polymérique est au moins égale à la température de fusion des fibres « basse température », de manière à faire fondre ces fibres « basse température » (fusion partielle). Cette fusion des fibres « basse température » de l'assemblage de fibres non tissées constituant le ruban de renfort 9 permet de renforcer les liaisons mécaniques entre la couche polymérique de la gaine de protection et d'étanchéité externe 8 et le ruban de renfort 9 enroulé autour. Alternativement, après avoir enroulé le ruban de renfort 9 autour de la gaine de protection et d'étanchéité externe 8, on peut prévoir d'acheminer la conduite à travers un four permettant de faire fondre les fibres « basse température » de l'assemblage de fibres non tissées, dans le même but de renforcer les liaisons mécaniques entre la couche polymérique de la gaine de protection et d'étanchéité externe et le ruban de renfort.

Selon encore une variante, pour réaliser le ruban de renfort 9 destiné à être lié à la gaine de protection et d'étanchéité externe 8, on peut également mettre en oeuvre un assemblage de fibres non tissées pré-imprégnées avec une résine comportant un agent de réticulation. Ainsi, après enroulement du ruban de renfort 9 autour de la gaine de protection et d'étanchéité externe 8, on réticule la résine contenant les fibres, permettant ainsi d'augmenter les propriétés mécaniques du revêtement constitué par le ruban de renfort 9 lié en face externe 82 de la gaine de protection et d'étanchéité externe 8 et partant, la résistance de cette dernière.

Conformément au mode de réalisation de la figure 3, le ruban de renfort 9 constitué de fibres 10 assemblées pour former un non tissé ou mat, est disposé au niveau de la face interne 81 de la gaine de protection et d'étanchéité externe 8, de manière à former, cette fois-ci, un revêtement en face interne 81 de la gaine de protection et d'étanchéité externe 8, permettant notamment d'éviter une abrasion interne de la gaine par frottement de celle-ci contre les couches sous-jacentes. Une méthode de mise en oeuvre du ruban de renfort 9 selon ce mode de réalisation lors de la fabrication de la conduite tubulaire flexible, est la suivante.

Le ruban de renfort 9 réalisé en fibres 10 non tissées est tout d'abord enroulée autour des nappes d'armures de résistance à la traction (ou autour d'un ruban de maintien précédemment enroulé à pas court autour des nappes d'armures destiné à réduire le risque de flambement radial en « cage d'oiseau »), Puis, le ruban de renfort 9 est revêtu d'une couche polymérique extrudée autour du ruban de renfort 9, de manière à former la gaine de protection et d'étanchéité externe 8 de la conduite, Les fibres 10 non tissées du ruban de renfort 9 enroulé autour des nappes d'armures, absorbent alors le matériau polymère en fusion extrudé autour, ce qui tend à faire pénétrer au moins partiellement le matériaupolymère en phase visqueuse vers l'intérieur du ruban de renfort 9, pour pouvoir, après refroidissement, emprisonner les fibres et ainsi assurer une bonne cohésion du ruban de renfort 9 avec la gaine de protection et d'étanchéité externe 8, en face interne 81 de celle-ci. Cette méthode de mise en oeuvre permet ainsi d'avoir le ruban de renfort 9 en fibres 10 non tissées lié à la face interne 81 de la gaine de protection et d'étanchéité externe 8.

Ce mode de mise en oeuvre peut également être combiné avec la variante décrite plus haut en référence au mode de mise en oeuvre de la figure 2, consistant à employer un assemblage de fibres non tissées imprégnées avec une matière de liage, permettant d'augmenter l'imprégnation du polymère en fusion ainsi que son adhérence, ou avec la variante consistant à employer un assemblage de fibres non tissées pré-imprégnées avec une résine réticulable (ou thermodurcissable), ou bien encore avec la variante consistant à employer un assemblage de fibres non tissées comprenant à la fois des fibres dites « basse température » et des fibres dites « haute température ».

Conformément au mode de réalisation de la figure 4, le ruban de renfort 9 constitué de fibres 10 assemblées pour former un non tissé ou mat, est disposé à coeur de la gaine de protection et d'étanchéité externe 8. Une méthode de mise en oeuvre du ruban de renfort 9 selon ce mode de réalisation lors de la fabrication de la conduite tubulaire flexible, est la suivante.

Une première couche polymérique est extrudée autour des armures de résistance aux efforts de traction, puis le ruban de renfort 9 réalisé en fibres 10 non tissées est enroulé autour de cette première couche polymérique, de sorte que le ruban de renfort 9 et la première couche polymérique s'interpénètrent au moins partiellement l'un dans l'autre, et le ruban de renfort 9 est ensuite revêtu d'une seconde couche polymérique extrudée par-dessus le ruban de renfort 9, avec une imprégnation des fibres 10 non tissées du ruban de renfort 9 par le matériau polymère de cette deuxième couche polymérique, afin d'obtenir une solidarisation de cette deuxième couche polymérique et du ruban de renfort 9. Cette méthode de mise en oeuvre permet ainsi d'avoir le ruban de renfort 9 en fibres 10 non tissées lié à coeur de la gaine de protection et d'étanchéité externe 8, constituée par les première et seconde couches polymériques extrudées.

Comme pour les modes de réalisation précédents décrivant le ruban de renfort lié à la face interne ou la face externe de la gaine de protection et d'étanchéité externe 8, ce mode de mise en oeuvre, décrivant le ruban de renfort lié à coeur de ladite gaine, peut également être combiné avec les variantes rappelées plus haut.

La présence du ruban de renfort en fibres non tissées lié, conformément à la présente invention, en face externe de la gaine de protection et d'étanchéité externe et/ou en face interne de la gaine de protection et d'étanchéité externe et/ou à coeur de la gaine de protection et d'étanchéité externe, selon les différentes combinaisons possibles entre les différents mode de réalisation décrits précédemment en référence aux figures 2, 3 et 4, permet :
- d'améliorer la résistance aux déchirements et à la propagation de fissures de la couche polymérique de protection et d'étanchéité externe ;
- d'améliorer la résistance à l'abrasion interne et/ou externe de ladite couche polymérique ;
- d'améliorer les performances de la conduite vis-à-vis du phénomène de « hoop stress » ;
- d'améliorer les performances d'isolation thermique de la conduite, d'autant plus si les fibres du matériau non tissé constituant le ruban de renfort sont complètement imprégnées.

En outre, les performances en « hoop stress » de la conduite étant notablement améliorées grâce à l'insertion du ruban de renfort en matériau non tissé au niveau de la gaine de protection et d'étanchéité externe, il est alors envisageable de réduire l'épaisseur de la gaine de protection et d'étanchéité externe, sans pour autant sacrifier la résistance de la conduite au « hoop stress ». Cette réduction de l'épaisseur de la gaine de protection et d'étanchéité externe permise par l'invention est particulièrement avantageuse en ce qu'elle procure une diminution des coûts de fabrication de la conduite (diminution des coûts de matière), ainsi qu'un gain de temps en termes de process de fabrication.

## Revendications

1. Conduite (1) tubulaire flexible destinée au transport des hydrocarbures réalisée par une superposition de couches successives indépendantes comprenant au moins, de l'intérieur vers l'extérieur, une gaine d'étanchéité interne (4), un enroulement hélicoïdal à pas court (5) d'un élément métallique, au moins une nappe d'armures de traction (6, 7) enroulées à pas long **caractérisée en ce que** la conduite comprend une gaine de protection et d'étanchéité externe (8) constituée d'une couche extrudée en matériau polymère comprenant deux faces opposées l'une de l'autre (81, 82), respectivement interne et externe, la gaine comprenant au moins un ruban de renfort (9) constitué d'un matériau non tissé à base de fibres (10) au moins partiellement noyées à l'intérieur dudit matériau polymère de ladite gaine de protection et d'étanchéité externe (8), pour lier ensemble mécaniquement ledit ruban de renfort (9) et ladite gaine de protection et d'étanchéité externe (8).

2. Conduite selon la revendication 1, **caractérisée en ce que** ledit ruban de renfort (9) est lié à ladite face interne (81) de ladite gaine de protection et d'étanchéité externe (8).

3. Conduite selon l'une quelconque des revendications 1 ou 2, **caractérisée en ce que** ledit ruban de renfort (9) est lié à ladite face externe (82) de ladite gaine de protection et d'étanchéité externe (8).

4. Conduite selon l'une quelconque des revendications précédentes, **caractérisé en ce que** ledit ruban de renfort (9) est lié sur chacune des deux faces opposées (81, 82), respectivement interne et externe, de ladite gaine de protection et d'étanchéité externe (8).

5. Conduite selon l'une quelconque des revendications précédentes, **caractérisée en ce que** ledit ruban de renfort (9) est lié à coeur de ladite gaine de protection et d'étanchéité externe (8).

6. Conduite selon l'un quelconque des revendications précédentes, **caractérisée en ce que** ledit ruban de renfort (9) est constitué d'une couche textile à base de fibres (10) courtes non tissées assemblées par compactage mécanique et/ ou collage.

7. Conduite selon l'une quelconque des revendications précédentes, **caractérisée en ce que** ledit ruban de renfort (9) est disposé selon un enroulement à pas court selon un angle compris entre 75° et 90° par rapport à l'axe longitudinal (2) de la conduite (1).

8. Conduite selon l'une quelconque des revendications 1 à 6, **caractérisée en ce que** ledit ruban de renfort (9) est disposé selon un enroulement à pas long selon un angle inférieur à 55° par rapport à l'axe longitudinal (2) de la conduite (1).

9. Conduite selon l'une quelconque des revendications précédentes, **caractérisée en ce que** lesdites fibres (10) non tissées sont au moins partiellement imprégnées avec un matériau polymère thermoplastique.

10. Conduite selon l'une quelconque des revendications précédentes, **caractérisé en ce que** lesdites fibres (10) sont réalisées dans un matériau choisi parmi les polyoléfines, les polyfluorés, les polyesters, les acryliques, les polyetherimides, les polysulfures, les poly(aryléthercétone), les aramides, le verre et le basait.

## Patentansprüche

1. Flexible Rohrleitung (1) für den Transport von Kohlenwasserstoffen, die durch ein Übereinanderlegen von unabhängigen aufeinander folgenden Schichten realisiert ist, umfassend, von innen nach außen, mindestens einen inneren Dichtungsmantel (4), eine spiralförmige Wicklung mit kleiner Gangart (5) aus einem metallischen Element, mindestens eine Schicht aus Zugbewehrungen (6, 7), die mit großer Gangart gewickelt sind, **dadurch gekennzeichnet, dass** die Leitung einen äußeren Schutz- und Dichtungsmantel (8) umfasst, der von einer Schicht gebildet ist, die aus Polymermaterial besteht, und zwei einander gegenüberliegende Flächen (81, 82), eine innere bzw. äußere, umfasst, wobei der Mantel mindestens ein Verstärkungsband (9) umfasst, das aus einem Vliesmaterial auf Basis von Fasern (10) besteht, die teilweise in das Innere des Polymermaterials des äußeren Schutz- und Dichtungsmantels (8) eingebettet sind, um das Verstärkungsband (9) und den äußeren Schutz- und Dichtungsmantel (8) mechanisch miteinander zu verbinden.

2. Leitung nach Anspruch 1, **dadurch gekennzeichnet, dass** das Verstärkungsband (9) mit der inneren Fläche (81) des äußeren Schutz- und Dichtungsmantels (8) verbunden ist.

3. Leitung nach einem der Ansprüche 1 oder 2, **dadurch gekennzeichnet, dass** das Verstärkungsband (9) mit der äußeren Fläche (82) des äußeren Schutz- und Dichtungsmantels (8) verbunden ist.

4. Leitung nach einem der vorhergehenden Ansprüche, **dadurch gekennzeichnet, dass** das Verstärkungsband (9) an jeder der zwei einander gegenüberliegenden Flächen (81, 82), der inneren bzw. äußeren, des äußeren Schutz- und Dichtungsmantels (8) verbunden ist.

5. Leitung nach einem der vorhergehenden Ansprüche, **dadurch gekennzeichnet, dass** das Verstärkungsband (9) im Kern des äußeren Schutz- und Dichtungsmantels (8) verbunden ist.

6. Leitung nach einem der vorhergehenden Ansprüche, **dadurch gekennzeichnet, dass** das Verstärkungsband (9) aus einer textilen Schicht auf Basis von kurzen Vliesfasern (10) besteht, die durch mechanisches Verdichten und/oder Verkleben zusammengefügt sind.

7. Leitung nach einem der vorhergehenden Ansprüche, **dadurch gekennzeichnet, dass** das Verstärkungsband (9) gemäß einer Wicklung mit kleiner Gangart in einem Winkel zwischen 75° und 90° zu der Längsachse (2) der Leitung (1) angeordnet ist.

8. Leitung nach einem der Ansprüche 1 bis 6, **dadurch gekennzeichnet, dass** das Verstärkungsband (9) gemäß einer Wicklung mit großer Gangart in einem Winkel kleiner als 55° zu der Längsachse (2) der Leitung (1) angeordnet ist.

9. Leitung nach einem der vorhergehenden Ansprüche, **dadurch gekennzeichnet, dass** die Vliesfasern (10) zumindest teilweise mit einem thermoplastischen Polymermaterial imprägniert sind.

10. Leitung nach einem der vorhergehenden Ansprüche, **dadurch gekennzeichnet, dass** die Fasern (10) aus einem Material realisiert sind, das ausgewählt ist aus den Polyolefinen, den Polyfluoren, den Polyestern, den Acrylen, den Polyetherimiden, den Polysulfiden, den Poly(etherketonen), den Aramiden, Glas und Basalt.

## Claims

1. A flexible tubular pipe (1) intended for transporting hydrocarbons produced by a superposition of successive independent layers comprising at least, from the inside outward, an internal sealing sheath (4), a short-pitch helical winding (5) of a metallic element, at least one tensile armor ply (6, 7) wound with a long pitch **characterized in that** the flexible tubular pipe comprises a protective external sealing sheath (8) consisting of an extruded layer made of polymer material comprising two, respectively inner and outer, faces opposite one another (81, 82), the sheath comprising at least one reinforcing band (9) consisting of a nonwoven material based on fibers (10) that are at least partially embedded inside said polymer of said protective external sealing sheath (8), in order to mechanically bond together said reinforcing band (9) and said protective external sealing sheath (8).

2. The pipe as claimed in claim 1, **characterized in that** said reinforcing band (9) is bonded to said inner face (81) of said protective external sealing sheath (8).

3. The pipe as claimed in either of claims 1 and 2, **characterized in that** said reinforcing band (9) is bonded to said outer face (82) of said protective external sealing sheath (8).

4. The pipe as claimed in any one of the preceding claims, **characterized in that** said reinforcing band (9) is bonded to each of the two, respectively inner and outer, opposite faces (81, 82) of said protective external sealing sheath (8).

5. The pipe as claimed in any one of the preceding claims, **characterized in that** said reinforcing band (9) is bonded in the middle of said protective external sealing sheath (8).

6. The pipe as claimed in any one of the preceding claims, **characterized in that** said reinforcing band (9) consists of a textile layer based on nonwoven short fibers (10) assembled by mechanical compacting and/or adhesive bonding.

7. The pipe as claimed in any one of the preceding claims, **characterized in that** said reinforcing band (9) is positioned with a short-pitch winding at an angle of between 75° and 90° with respect to the longitudinal axis (2) of the pipe (1).

8. The pipe as claimed in any one of claims 1 to 6, **characterized in that** said reinforcing band (9) is positioned with a long-pitch winding at an angle of less than 55° with respect to the longitudinal axis (2) of the pipe (1).

9. The pipe as claimed in any one of the preceding claims, **characterized in that** said nonwoven fibers (10) are at least partially impregnated with a thermoplastic polymer.

10. The pipe as claimed in any one of the preceding claims, **characterized in that** said fibers (10) are made from a material selected from polyolefins, fluoropolymers, polyesters, acrylics, polyetherimides, polysulfides, polyaryletherketones, aramids, glass and basalt.
